## Europäisches Patentamt

## European Patent Office

## Office européen des brevets

(19)

(11) Veröffentlichungsnummer: **0 062 107**
**B1**

(12) ## EUROPÄISCHE PATENTSCHRIFT

(45) Veröffentlichungstag der Patentschrift:
**12.03.86**

(51) Int. Cl.⁴: **G 06 F  9/46,** G 06 F  3/023

(21) Anmeldenummer: **81109140.4**

(22) Anmeldetag: **28.10.81**

(54) **Verfahren zum Koordinieren einer Mehrzahl von Prozessen unter Verwendung eines Mikrorechners.**

(30) Priorität: **01.04.81  DE 3113138**

(43) Veröffentlichungstag der Anmeldung:
**13.10.82 Patentblatt 82/41**

(45) Bekanntmachung des Hinweises auf die Patenterteilung:
**12.03.86 Patentblatt 86/11**

(84) Benannte Vertragsstaaten:
**CH FR GB IT LI NL SE**

(56) Entgegenhaltungen:
**FR - A - 2 208 551**

**DATA PROCESSING, Band 20, Nr. 5, Mai 1978, Seiten 39-43, London, G.B., B. ASTLEY: "Raster displays - an evaluation"**
**"Datenverarbeitungsanlage 3003", Beschreibung Nr. Bs101 und Nr. Bs102, Siemens & Halske AG**

(73) Patentinhaber: **Siemens Aktiengesellschaft, Berlin und München Wittelsbacherplatz 2, D-8000 München 2 (DE)**

(72) Erfinder: **Neureiter, Norbert, Ing.grad., Schäftlarnstrasse 72, D-8000 München 70 (DE)**
Erfinder: **Stojadinovic, Zeljko, Dipl.-Ing., Werdenfelsstrasse 4, D-8000 München 70 (DE)**

## Beschreibung

Die Erfindung bezieht sich auf ein Verfahren zum Koordinieren einer Mehrzahl von Prozessen unter Verwendung eines einzigen zentralen Rechners entsprechend dem Oberbegriff des Patentanspruchs 1.

Als Teilnehmerstationen für den neuen Telekommunikationsdienst «Teletex» werden Textstationen eingesetzt. Im Vergleich zu den bekannten Fernschreibmaschinen zeichnet sich «Teletex» durch quantitative und qualitative Verbesserung für den Benutzer aus, wie z.B. durch höhere Übertragungsgeschwindigkeit, durch grösseren Zeichenvorrat und freizügige Textformatierung. Ausserdem haben die Textstationen neben der Kommunikationsfähigkeit auch Eigenschaften von Speicherschreibmaschinen mit Textbearbeitungsmöglichkeiten. Die Textstationen vereinigen in sich zwei charakteristische Funktionskomplexe und zwar den Komplex der Funktionen zur Lokalarbeit und den Komplex der Funktionen zur Textkommunikation. Unter Lokalarbeit wird dabei die Texterstellung, die Textspeicherung und die Textbearbeitung verstanden. Die Hauptfunktion des Komplexes Kommunikation sind das Empfangen, das Senden und das Zwischenspeichern von Textdaten. Der für das Empfangen bzw. Senden erforderliche Verbindungsaufbau und -abbau sowie die Textübertragung laufen dabei weitgehend automatisch ab. Ein Leistungsmerkmal der Textstation ist es, dass die Vorgänge der Textübermittlung simultan zu den Vorgängen der Lokalarbeit ablaufen können.

Die lokale Schreibarbeit, die wegen des dezentralen Einsatzes der Textstation im Büro zeitlich dominiert, darf nicht durch die Kommunikationstätigkeiten gestört werden.

Die Steuerung der Textstation ist hierarchisch organisiert. Die übergeordneten Verarbeitungs- und Koordinierungsfunktionen werden von einem zentralen Mikrorechner wahrgenommen. Die Steuerung und die Überwachung der verschiedenen Ein-Ausgabegeräte, wie Tastatur, Drucker, Bildschirm, Sekundärspeicher und Übertragungseinrichtungen, werden durch periphere Mikrorechner realisiert, die dem zentralen Mikrorechner untergeordnet sind. Eine Hauptaufgabe des zentralen Mikrorechners ist es, sämtliche Ein-Ausgabevorgänge zu koordinieren und die anwendungsbestimmenden Funktionen zur Lokalarbeit und Kommunikation zu realisieren.

Es wäre denkbar, die gegebenenfalls parallel ablaufenden Funktionen, wie Lokalarbeit, Kommunikation und Ein-Ausgabevorgänge durch den Einsatz mehrerer parallel arbeitender Mikroprozessoren zu realisieren. Eine derartige Realisierung erfordert jedoch einen verhältnismässig grossen Aufwand. Mehrere Mikroprozessoren erhöhen den schaltungstechnischen Aufwand und zusätzlich ist ein Programmaufwand für die Koordinierung der Mikroprozessoren untereinander erforderlich.

Aus einer Druckschrift Siemens & Helske Aktiengesellschaft: «Datenverarbeitungsanlage 3003», Teil 2, März 1963, Seiten 4 bis 8 ist es bekannt, mehrere voneinander unabhängige Programme auf einer Datenverarbeitungsanlage mit nur einer zentralen Rechnereinheit simultan zu bearbeiten. Die Koordinierung der verschiedenen Programme wird durch ein Schaltnetzwerk oder durch ein Programm durchgeführt, wobei das Schaltnetzwerk in erster Linie für das Benutzen des Arbeitsspeichers vorgesehen ist, wogegen die Simultanverarbeitung mehrerer Programme durch ein Organisationsprogramm koordiniert wird. Bei kurzen Operationen wie beispielsweise arithmetischen Verknüpfungen wird die Koordinierung durch ein Schaltnetzwerk durchgeführt, während bei langen Operationen, wie beispielsweise Ein- und Ausgaben die Koordinierung durch das Schaltnetzwerk nur angestossen wird und dann durch das Organisationsprogramm ausgeführt wird. Simultan zu einer langen Operation kann ein unabhängiges Programm durchgeführt werden und es wird durch ein Binärzeichen gekennzeichnet, ob ein Programm fertig ist und mittels eines Organisationsaufrufs wird dieses Binärzeichen jeweils abgefragt.

Aus einer weiteren Druckschrift Siemens & Halske Aktiengesellschaft: «Datenverarbeitungsanlage 3003», Teil 1, März 1963, Seiten 15 und Anhang 3 ist es bekannt, ein Programm durch eine unbedingte Anforderung an die Programmsteuerung zu unterbrechen. Sobald eine derartige Anforderung im Programmunterbrechungsregister vorliegt, wird ein gegebenenfalls gerade laufendes Programm zum frühestmöglichen Zeitpunkt unterbrochen. Anschliessend wird ein neuer Programmzyklus gestartet, bei dem der Inhalt des Programmunterbrechungsregisters geprüft wird, um die Ursache der Programmunterbrechung feststellen zu können.

Der Erfindung liegt die Aufgabe zugrunde, ein Verfahren zum Koordinieren einer Mehrzahl von Prozessen unter Verwendung eines einzigen zentralen Rechners und einer als Programm realisierten Ablaufsteuerung anzugeben, das es ermöglicht, dass sowohl Anwenderprozesse als auch Ein-Ausgabeprozesse quasi-simultan ablaufen und das einen geringen Aufwand erfordert.

Erfindungsgemäss wird die Aufgabe bei dem Verfahren der eingangs genannten Art durch die im kennzeichnenden Teil des Patentanspruches 1 angegebenen Merkmale gelöst.

Das Verfahren gemäss der Erfindung hat den Vorteil, dass die Funktionen zur Steuerung und Koordinierung der Anwender- und Ein-Ausgabeprozesse zentralisiert werden. Dadurch entstehen einheitliche Schnittstellen und Koordinierungsregeln zwischen den Anwender- und Ein-Ausgabeprozessen. Die Anwender- und die Ein-Ausgabeprozesse werden von Koordinierungsaufgaben befreit und können somit unabhängig voneinander konzipiert werden. Der Kern des Verfahrens wird durch die Ablaufsteuerung gebildet, die den Mikroprozessor im Mikrorechner je nach Bedarf den einzelnen Anwender- und Ein-Ausgabeprozessen zuteilt oder entzieht. Die Ablaufsteuerung arbeitet dabei entsprechend einer Kombination der bekannten Ereignisbehandlungsmethoden, nämlich der Unterbrechungsmethode und der Abfragemethode. Das Verfahren kann daher als kombiniertes Unterbrechungs/Abfrageverfahren zur Koordinierung von parallelen Prozessen betrachtet werden.

Es ist möglich, die Ein-Ausgabebefehle und die Wartebefehle jeweils getrennt vom Anwenderprogramm vorzusehen. Eine vorteilhafte Ausführung des Verfahrens wird jedoch erreicht, wenn im Anwendeprogramm Wartebefehle vorgesehen sind, die mit einem Ein-Ausgabebefehl kombiniert sind.

Um unerwünschte Verzögerungen im Verfahrensablauf zu verhindern, ist es vorteilhaft, wenn die Unterbrechungsverteilung die Unterbrechungsanforderungen der Ein-Ausgabeeinheiten nach fest vorgesehenen Prioritäten verteilt.

Die Ausführungen von Teiloperationen durch die Ein-Ausgabeeinheiten werden der Ablaufsteuerung durch Unterbrechungsanforderungen mitgeteilt. Für die Durchführung des Verfahrens ist es jedoch vorteilhaft, wenn eine Meldung, die den vollständigen Abschluss eines Ein-Ausgabeprozesses anzeigt, der Ablaufsteuerung mittels einer Datenschnittstelle mitgeteilt wird.

Das Verfahren kann mit bekannten Mikrorechnern ohne weiteres durchgeführt werden, wenn die Ein-Ausgabebefehle und die Koordinierungsbefehle der Ablaufsteuerung in Form von besonderen ORG-Befehlen ausgebildet sind.

Im folgenden wird eine Durchführung des Verfahrens gemäss der Erfindung anhand von Zeichnungen näher erläutert. Es zeigen:

Fig. 1 ein Blockschaltbild einer Textstation,
Fig. 2 eine schematische Darstellung der von der Textstation auszuführenden Funktionen und der hierzu erforderlichen Programme und
Fig. 3 ein Beispiel einer parallelen Bearbeitung von mehreren Prozessen.

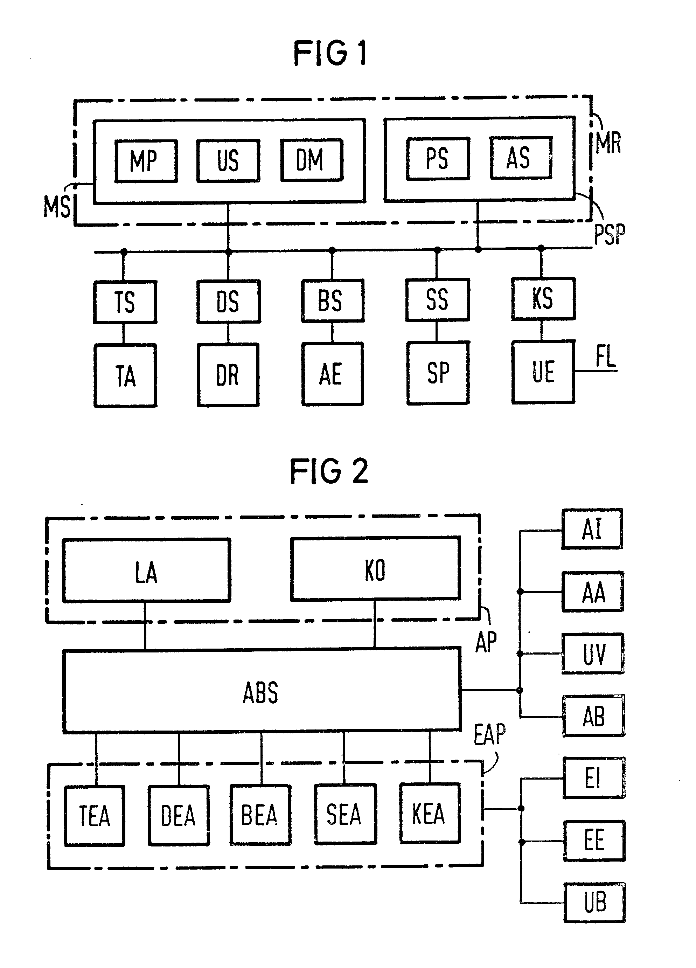

Die in Figur 1 dargestellte Textstation ist für den Telekommunikationsdienst «Teletex» vorgesehen. Mit Hilfe der Textstation können Texte eingegeben, be- und/oder verarbeitet werden und über eine Fernleitung FL zu einem fernen Teilnehmer übertragen werden. Die Texte können auch über die Fernleitung FL empfangen werden und an der Textstation ausgegeben werden.

Der Kern der Steuerung der Textstation wird durch einen Mikrorechner MR gebildet. Die Funktionskomponenten des Mikrorechners MR sind eine Mikroprozessorsteuerung MS mit einem Mikroprozessor MP, einer Unterbrechungsschaltung US zur Priorisierung der Anforderungen von Ein-Ausgabegeräten und mit einer Steuerung DM für den direkten Speicherzugriff der Ein-Ausgabegeräte. Weiterhin enthält der Mikrorechner MR einen Primärspeicher PSP, der in einen Programmspeicher PS und einen Arbeitsspeicher AS eingeteilt ist. Die Mikroprozessorsteuerung MS und der Primärspeicher PSP sind über einen Systembus SB miteinander verbunden. An dem Systembus SB sind weiterhin Ein-Ausgabeeinheiten angeschlossen. Die Ein-Ausgabeeinheiten werden aus den Ein-Ausgabegeräten und entsprechenden Steuerungen gebildet, die die Verbindung zum Mikrorechner MR herstellen. Die Steuerungen sind zweckmässigerweise ebenfalls mit Hilfe von Mikrorechnern realisiert. Eine Tastatur TA ist über eine Tastatursteuerung TS am Systembus SB angeschlossen. Sie enthält die Tasten für die Eingabe von Texten, Bedienungstasten und Betriebsanzeigen. Ein Drucker DR, beispielsweise ein Typenscheibendrucker oder ein Matrixdrucker, ist über eine Druckersteuerung DS angeschlossen. Weiterhin enthält die Textstation eine Anzeigeeinheit AE, die mit einem Bildschirm versehen ist und eine zugehörige Bildschirmsteuerung BS. Zur lokalen Speicherung von Texten und zur Zwischenspeicherung von zu sendenden oder empfangenden Texten ist ein Sekundärspeicher SP vorgesehen, der über eine Speichersteuerung SS angeschlossen ist. Der Sekundärspeicher SS wird beispielsweise aus zwei Floppy-Disk-Laufwerken gebildet. Eine Übertragungseinheit UE, die über eine Kommunikationssteuerung KS am Systembus SB angeschlossen ist, stellt die Verbindung der Textstation zur Fernleitung FL her.

Bei der Darstellung in Figur 2 sind die beiden Hauptfunktionen der Textstation, nämlich die Lokalarbeit LA und die Kommunikation KO, als getrennte Einheiten dargestellt. Die Lokalarbeit LA umfasst die Texterstellung, die Textspeicherung und die Textbearbeitung. Die Texterstellung erfolgt mit Hilfe der Tastatur TA und die eingegebenen Texte werden entweder am Drucker DR ausgedruckt oder am Bildschirm der Anzeigeeinheit AE angezeigt. Die Texte können gleichzeitig im Sekundärspeicher SP gespeichert werden. Die wesentlichen Funktionen der Textbearbeitung sind die sog. Sofortkorrektur und das Redigieren der Texte.

Die Hauptfunktionen des Komplexes Kommunikation KO sind das Empfangen, das Senden und das Zwischenspeichern von Texten. Das Zwischenspeichern erfolgt im Sekundärspeicher SP. Durch das Zwischenspeichern der empfangenen Texte wird die Forderung erfüllt, dass beim Empfang oder beim Senden eines Textes die Lokalarbeit LA nicht unterbrochen werden muss.

Die Lokalarbeit LA und die Kommunikation KO stellen, dynamisch betrachtet, Anwenderprozesse AP dar. Zur Ausführung der Anwenderprozesse AP sind Ein-Ausgabeprozesse EAP erforderlich. Diese Ein-Ausgabeprozesse EAP sind die Tastatur-Ein-Ausgabe TEA, die Drucker-Ein-Ausgabe DEA, die Bildschirm-Ein-Ausgabe BEA, die Speicher-Ein-Ausgabe SEA und die Kommunikations-Ein-Ausgabe KEA. Den Anwenderprozessen LA und KO können nun verschiedene Ein-Ausgabeprozesse EAP zugeordnet werden. Die Anwenderprozesse LA bzw. KO können parallel (quasi-simultan) zu einem oder mehreren Ein-Ausgabeprozessen EAP ablaufen. Auch können die beiden Anwenderprozesse LA und KO parallel zueinander ablaufen. Die Koordinierung der Prozesse und die Zuordnung des Mikrorechners MR zu den verschiedenen Prozessen erfolgt unter Verwendung einer Ablaufsteuerung ABS, die zusammen mit den Ein-Ausgabesteuerungen EAP das Betriebssystem des Mikrorechners MR darstellen.

Die Programmkomponenten der Ablaufsteuerung ABS sind die Ablaufinitialisierung AI, die Auftragsabwicklung AA, die Unterbrechungsverteilung UV und die Ablaufbeendigung AB. Die Ablaufinitialisierung AI sorgt für den programmtechnischen Ablauf des zentralen Mikrorechners MR, wenn die Textstation aus dem Bereitzustand in den Arbeitszustand versetzt wird, was entweder durch das lokale Einschalten über die Tastatur TA oder durch einen ankommenden Ruf über die Fernleitung FL durch die Übertragungseinheit UE ausgelöst werden kann. Die Auftragsabwicklung AA entschlüsselt die logischen Ein-Ausgabe- und die Koordinierungsbefehle der Anwendungsprozesse AP, veranlasst die physikalischen Ein-Ausgabeaktivitäten der Ein-Ausgabeprozesse und verständigt die Anwenderprozesse über deren Abschluss. Als Voraussetzung dafür realisiert sie auch die Funktionen zur Prozesskoordinierung und zur Betriebsmittelverwaltung, d.h. Zuteilung oder Entzug des Mikrorechners MR. Unter Prozesskoordinierung ist hier die Organisation des Zusammenwirkens der Anwenderprozesse AP mit den Ein-Ausgabeprozessen und der Anwenderprozesse LA bzw. KO untereinander gemeint. Dabei kann sich ein Anwenderprozess LA oder KO quasi-gleichzeitig der Dienste mehrerer Ein-Ausgabeprozesse EAP bedienen sowie quasi-simultan zum anderen Anwenderprozess ablaufen, was einer Parallelarbeit entspricht. Unter Betriebsmittelverwaltung sind die Funktionen zur Verwaltung des Mikroprozessors MP im Mikrorechner MR und der Ein-Ausgabegeräte zu verstehen. Mit Hilfe der Buchführung über die Verfügbarkeit werden die genannten Betriebsmittel den einzelnen Prozessen dynamisch zugeteilt bzw. entzogen. Die Unterbrechungsverteilung UV interpretiert die Unterbrechungsanforderungen der einzelnen Ein-Ausgabegeräte und verteilt sie auf die zuständigen Ein-Ausgabeprozesse. Die Aufgabe der Ablaufbeendigung AB ist die Überführung der Textstation aus dem Arbeitszustand in den Bereitzustand. Das geschieht immer dann, wenn sich alle Prozesse während einer festgelegten Zeit im Ruhezustand befinden.

Die Ablaufkomponenten der Ein-Ausgabeprozesse EAP sind die Ein-Ausgabeinitialisierung EI, die Ein-Ausgabeeinleitung EE und die Unterbrechungsbehandlung UB. Die Ein-Ausgabeinitialisierung versorgt jeweils die peripheren Gerätesteuerungen mit den Arbeitsparametern und versetzt sie in den Grundzustand. Die Ein-Ausgabeeinleitung EE startet die durch den jeweiligen Ein-Ausgabeauftrag bestimmten Ein-Ausgabeoperationen. Dabei werden die logischen Ein-Ausgabeaufträge der Anwenderprozesse interpretiert und in die erforderlichen Schnittstellenbefehle für die Gerätesteuerungen umgesetzt. Die Unterbrechungsbehandlung UB bedient die gerätespezifischen Unterbrechungsanforderungen und schliesst die auftragsabhängigen Ein-Ausgabeoperationen ab.

Die Programmkomponenten arbeiten bei dem Ablauf des Verfahrens folgendermassen zusammen: Nach dem Einschalten und Rücksetzen läuft das Programm des Mikrorechners MR mit der Ablaufinitialisierung AI an. Diese ruft die Prozeduren zur Ein-Ausgabeinitialisierung EI der einzelnen Gerätesteuerungen nacheinander auf. Anschliessend startet sie die Anwenderprozesse AP. Die Anwenderprozesse AP nehmen die Dienste des Betriebssystems mit Hilfe von logischen Ein-Ausgabe- und Koordinierungsaufträgen in Anspruch. Sämtliche Aufträge werden mittels eines standardisierten Betriebssystemaufrufs, des ORG-Befehls, an die Auftragsabwicklung AA gerichtet. Diese interpretiert jeden Auftrag und im Falle eines Ein-Ausgabeauftrages ruft sie die zuständige Prozedur zur Ein-Ausgabeeinleitung EE auf.

Nach der Einleitung der Ein-Ausgabeoperation arbeitet die angesprochene Gerätesteuerung zeitweise selbständig und meldet den Abschluss von Teiloperationen mit Hilfe von Unterbrechungsanforderungen. Diese werden mittels der Unterbrechungsverteilung UV an die zuständige Ein-Ausgabeunterbrechungsbehandlung UB weitergeleitet. Erst der Abschluss einer kompletten Ein-Ausgabeoperation wird der Auftragsabwicklung AA mit Hilfe einer Datenschnittstelle der Ablaufsteuerung ABS mitgeteilt. Daraufhin quittiert die Auftragsabwicklung AA den Auftrag dem entsprechenden Anwenderprozess AP.

Befinden sich die beiden Anwenderprozesse LA bzw. KO für längere Zeit im Grundzustand, in dem sie keine Aufträge mehr absetzen, aktiviert die Auftragsabwicklung AA die Ablaufbeendigung AB, die den Mikrorechner MR ausschaltet und die Textstation in den Bereitschaftszustand versetzt.

Das Anwenderprogramm ruft das Betriebssystem mit Hilfe des ORG-Befehls auf. Bei dem ORG-Befehl werden mehrere Parameter übergeben, insbesondere die Auftragskennung und der Wartemodus. Die Auftragskennung spezifiziert die Art des Auftrags. Es wird dabei zwischen Ein-Ausgabeaufträgen und Koordinierungsaufträgen unterschieden. Bei den Ein-Ausgabeaufträgen werden die entsprechenden Ein-Ausgabeeinheiten angesprochen. Die Koordinierungsaufträge ermöglichen die Bestimmung der Art des Zusammenwirkens der Anwenderprozesse AP mit den Ein-Ausgabeprozessen EAP und der Anwenderprozesse untereinander.

Der wichtigste Koordinierungsauftrag ist der Warteauftrag. Mit Hilfe des Warteauftrags definiert der Anwenderprozess AP die Zustände, in denen er bereit ist, Fertigmeldungen von Ein-Ausgabeprozessen und/oder Verständigungsmeldungen vom anderen Anwenderprozess AP zu akzeptieren. Bei einem Ein-Ausgabeauftrag ist normalerweise der Modus «kein Warten» vorgesehen, so dass der aufrufende Anwenderprozess AP simultan zur Ausführung der eingeleiteten Ein-Ausgabeoperation ablaufen soll. Eine Angabe «Warten implizit» bei einem Ein-Ausgabeauftrag bedeutet, dass der Anwenderprozess AP sofort in den Wartezustand versetzt werden soll, indem er auf den Abschluss einer Ein-Ausgabeoperation wartet. Den Modus «Warten explizit» verwendet der Anwenderprozess AP dann, wenn er mit Hilfe des gesonderten Koordinierungsaufrufes der Ablaufsteuerung mitteilt, dass er auf den Abschluss einer oder mehrerer Ein-Ausgabeoperationen bzw. auf die Verständigung vom anderen Anwenderprozess AP warten muss.

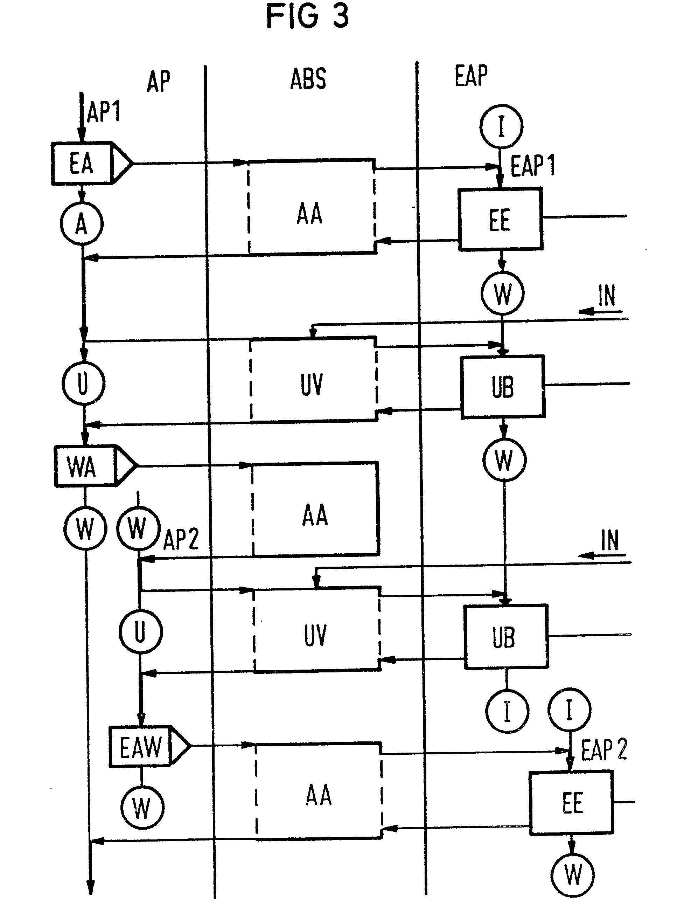

Weitere Eizelheiten des Verfahrens werden zusammen mit dem in Figur 3 dargestellten Ablaufdiagramm beschrieben.

Bei dem in Figur 3 dargestellten Diagramm ist der quasi-simultane Ablauf von zwei Anwenderprozessen AP1 und AP2 und von zwei Ein-Ausgabeprozessen EAP1 und EAP2 dargestellt. Die Zeitachse verläuft in vertikaler Richtung von oben nach unten und der Ablauf der Bearbeitung der Prozesse ist jeweils durch Pfeile dargestellt. Die Prozesszustände sind kreisförmig eingezeichnet. Diese Zustände sind «ablaufend» A, «unterbrochen» U, «wartend» W und «inaktiv» I. In der linken Spalte sind die Anwenderprozesse AP dargestellt, in der mittleren Spalte sind die Koordinierungsaktivitäten für die Prozessumschaltung durch die Ablaufsteuerung ABS dargestellt und die rechte Spalte zeigt die Ein-Ausgabeprozesse EAP.

Der Anwenderprozess AP1 steuert beispielsweise einen Ausgabevorgang zum Drucken von Texten am Drucker DR. Der Anwenderprozess AP1 enthält einen Ein-Ausgabebefehl EA, der den Ausgabeauftrag an die Auftragsabwicklung AA der Ablaufsteuerung ABS übergibt.

Unter der Voraussetzung, dass der Ein-Ausgabebefehl EA den Wartemodus «kein Warten» verwendet, wird von der Auftragsabwicklung AA der logische Zustand des Anwenderprozesses AP1 als «ablaufend» A notiert, damit er unmittelbar nach der Ein-Ausgabeeinleitung EE fortgesetzt wird. Zur Einleitung der Ausgabeoperation wird der zuständige Ein-Ausgabeprozess EAP1, der bisher «inaktiv» I war, von der Auftragsabwicklung AA aktiviert. Er übergibt den ersten Befehl an die periphere Druckersteuerung DS und geht in den Zustand «wartend» W über, indem er die Steuerung an die Auftragsabwicklung AA zurückgibt. Diese wiederum setzt den Anwenderprozess AP1 fort. Der Anwenderprozess AP1 läuft somit parallel zur eingeleiteten Ein-Ausgabeoperation und zwar echt simultan in bezug auf den Steuerprozess im peripheren Mikrorechner der Druckersteuerung DS, jedoch quasi-simultan in bezug auf den aktivierten internen Ein-Ausgabeprozess, da den Prozessen des zentralen Mikrorechners MR nur ein Mikroprozessor MP als Betriebsmittel zur Verfügung steht. Das wirkt sich so aus, dass der ablaufende Anwenderprozess AP1 durch die Teilabläufe des parallelen Ein-Ausgabeprozesses EAP1 bedarfsweise unterbrochen wird. Bei der Operation «Drucken Textzeile» geschieht das beispielsweise einmal pro Zeichen, wobei die periphere Druckersteuerung DS die einzelnen Zeichen mit Hilfe von Unterbrechungsanforderungen IN anfordert. Der Unterbrechungsverteiler UV unterbricht den Anwenderprozess AP1 und ruft jedesmal die zuständige Unterbrechungsbehandlung UB auf zum Zweck der gerätespezifischen Unterbrechungsbehandlung UB und setzt anschliessend den unterbrochenen Anwenderprozess AP1 fort.

Zu einem bestimmten Zeitpunkt muss der Anwenderprozess AP1 den Abschluss des Druckvorgangs abfragen, da dies die Voraussetzung für seinen weiteren Ablauf ist. Diese Tatsache teilt er dem Betriebssystem mit Hilfe des Befehls «Warten explizit» WA mit. Aufgrund der Prozesszustandsnotierung erkennt die Auftragsabwicklung AA, dass der Druckerausgabeprozess noch nicht abgeschlossen ist, also der aufrufende Anwenderprozess AP1 in den Wartezustand W versetzt werden muss.

Nun kann ein anderer Anwenderprozess AP2, der sich im Wartezustand W befand, fortgesetzt werden und zwar vorausgesetzt, dass seine Fortsetzungsbedingung inzwischen erfüllt wurde. Jetzt läuft der Anwenderprozess AP2 parallel zum Ein-Ausgabeprozess EAP1 ab. Auch er wird durch die Unterbrechungsanforderungen IN der Druckersteuerung DS unterbrochen. Im Fall der letzten Unterbrechungsbehandlung UB eines Druckvorgangs hinterlegt der Ein-Ausgabeprozess EAP1 eine Fertigmeldung in einem Zustandsdatenbereich der Auftragsabwicklung AA. Anschliessend geht er in den Zustand «inaktiv» I über, wodurch der unterbrochene Anwenderprozess AP2 fortgesetzt wird. Dieser wiederum tätigt einen anderen Ein-Ausgabebefehl EAW, der den Wartemodus «implizites Warten» verwendet. Die gewünschte Ein-Ausgabeoperation eines Ein-Ausgabeprozesses EAP2 wird zwar eingeleitet, der aufrufende Anwenderprozess AP2 wird jedoch sofort in den Wartezustand W versetzt. Die Auftragsabwicklung AA prüft daraufhin, ob die Fortsetzungsbedingung für den Anwenderprozess AP1 erfüllt ist. Sie findet im Zustandsdatenbereich die Fertigmeldung des abgeschlossenen Ein-Ausgabeprozesses EAP1 vor und setzt daraufhin den wartenden Anwenderprozess AP1 fort.

An diesem Beispiel wurde dargestellt, wie die Komponenten der Ablaufsteuerung ABS das Zusammenwirken jeweils eines Anwenderprozesses AP mit einem Ein-Ausgabeprozess EAP koordinieren. Im allgemeinen ist es jedoch möglich und notwendig, dass ein Anwenderprozess AP mit mehreren parallel ablaufenden Ein-Ausgabeprozessen EAP und zusätzlich bzw. alternativ mit einem anderen Anwenderprozess AP zusammenarbeitet. Das dargestellte Koordinierungsprinzip ist jedoch qualitativ unabhängig von der Anzahl der zu koordinierenden parallel ablaufenden Prozesse.

Unter Verwendung der Auftragsabwicklung AA und der Unterbrechungsverteilung UV wird die verfügbare Verarbeitungskapazität des Mikroprozessors MP zeitgerecht an die Ein-Ausgabeprozesse EAP und an die Anwenderprozesse AP verteilt. Die Dringlichkeit der Aufgaben der unterschiedlichen Prozesse wird dabei dadurch berücksichtigt, dass der Mikroprozessor MP entsprechend fest vorgegebenen Prioritäten den verschiedenen Ein-Ausgabeprozessen EAP zugeteilt wird. Dies erfolgt unter Verwendung des Unterbrechungsverteilers UV. Die Zuteilung des Mikroprozessors MP erfolgt bei dem Verfahren ereignisbezogen und nicht zyklisch zeitbezogen. Das heisst, dass nur beim Auftreten von bedeutenden externen oder internen Ereignissen Zuteilungsentscheidungen getroffen werden. Die externen Ereignisse sind die Unterbrechungsanforderungen IN der Ein-Ausgabesteuerungen und die internen Ereignisse sind die Betriebssystemaufrufe der Anwenderprozesse AP und die Fertigmeldungen der Ein-Ausgabeprozesse EAP. Den Anwenderprozessen AP wird der Mikroprozessor MP abhängig von ihren Zuständen und den programmtechnisch erstellten Ablaufpositionen zugeteilt. Die zuständige Verwaltungskomponente ist die Auftragsabwicklung AA, die nach jedem Systemaufruf entscheidet, ob eine Fortsetzung des Anwenderprozesses AP möglich ist und eine Prozessumschaltung notwendig ist. Darüber hinaus kann der Mikroprozessor MP einem Anwenderprozessor AP jederzeit entzogen werden. Ein Ein-Ausgabeprozess EAP belegt den Mikroprozessor MP so lange, bis er entweder durch ein Ereignis mit höherer Priorität unterbrochen wird oder von sich aus den Mikroprozessor MP freigibt.

## Patentansprüche

1. Verfahren zum Koordinieren einer Mehrzahl von Prozessen unter Verwendung eines einzigen zentralen Rechners (MR), bei dem die Prozesse durch Anwenderprogramme realisierte Anwenderprozesse (AP) und durch Ein-Ausgabeprogramme realisierte Ein-Ausgabeprozesse (EAP) umfassen, bei dem der Rechner (MR) einen Befehl, der Teil des Anwenderprogramms ist, an eine Auftragsabwicklung (AA) richtet, die Teil einer Ablaufsteuerung (ABS) ist, bei dem die Auftragsabwicklung (AA) den Befehl interpretiert, bei dem die entsprechende Ein-Ausgabeeinheit den Ein-Ausgabebefehl ausführt, bei dem die vollständige Ausführung des Ein-Ausgabebefehls der Auftragsabwicklung (AA) mitgeteilt wird, bei dem im Falle eines Wartebefehls (WA, EAW), der Teil des Anwenderprogramms ist, die Auftragsabwicklung (AA) das Anwenderprogramm erst dann fortsetzt, wenn erwartete Meldungen vorliegen, und bei dem, falls ein weiterer Anwenderprozess (AP) sich im Wartezustand befindet und dort die erwarteten Meldungen vorliegen, dieser fortgesetzt wird, dadurch gekennzeichnet, dass als Rechner (MR) ein Mikrorechner verwendet wird, dass im Fall eines Ein-Ausgabebefehls (EA, EAW) die Auftragsabwicklung (AA) eine zuständige Ein-Ausgabeeinleitung (EE) aufruft, die Teil des Ein-Ausgabeprogramms ist, dass nach dem Abschluss von Teiloperationen die Ein-Ausgabeeinheit Unterbrechungsanforderungen (IN) an eine Unterbrechungsverteilung (UV) richtet, die Teil der Ablaufsteuerung (ABS) ist, dass die Unterbrechungsverteilung (UV) die Unterbrechungsanforderung (IN) an die entsprechende Ein-Ausgabeunterbrechungsbehandlung (UB) weiterleitet, die Teil des Ein-Ausgabeprogramms ist, und dass die Unterbrechungsanforderungen (IN), die dem Ein-Ausgabeprogramm des ersten Anwenderprozesses (AP) zugeordnet sind, auch während der Bearbeitung des weiteren Anwenderprozesses (AP) durch die Auftragsabwicklung (AA) bearbeitet werden.

2. Verfahren nach Anspruch 1, dadurch gekennzeichnet, dass im Anwenderprogramm Wartebefehle vorgesehen sind, die mit einem Ein-Ausgabebefehl (EAW) kombiniert sind.

3. Verfahren nach Anspruch 1 oder Anspruch 2, dadurch gekennzeichnet, dass die Unterbrechungsverteilung (UV) die Unterbrechungsanforderungen (IN) der Ein-Ausgabeeinheiten nach fest vorgegebenen Prioritäten verteilt.

4. Verfahren nach einem der Ansprüche 1 bis 3, dadurch gekennzeichnet, dass eine Meldung, die den vollständigen Abschluss eines Ein-Ausgabeprozesses (EAP) anzeigt, der Ablaufsteuerung (ABS) mittels einer Datenschnittstelle mitgeteilt wird.

## Claims

1. A method of coordinating a plurality of processes by using a single central computer (MR), wherein the processes comprise user processes (AP) which are realised by user programmes and in-output processes (EAP) which are realised by in-output programmes, wherein the computer (MR) sends an instruction, which is part of the user programme, to an order handling unit (AA) which is part of a sequence control unit (ABS), wherein the order handling unit (AA) interprets the instruction, wherein the corresponding in-output unit carries out the in-output instruction, wherein the order handling unit (AA) is informed of the complete execution of the in-output instruction wherein in the event of a wait instruction (WA, EAW) which is part of the user programme, the order handling unit (AA) only continues the user programme when expected messages are present, and wherein if a further user process (AP) is in the waiting position and the expected messages are present, said user process is continued, characterised in that a microcomputer is used as a computer (MR), that in the event of an in-output instruction (EA, EAW) the order handling unit (AA) calls up an appropriate in-output initiator (EE) which is part of the in-output programme, that following the termination of partial operations the in-output unit sends interruption requests (IN) to an interruption distribution unit (UV) which is part of the sequence control unit (ABS), that the interruption distribution unit (UV) transfers the interruption request (IN) to the appropriate in-output interruption processing unit (UB) which is part of the in-output programme, and that the interruption requests (IN) which are assigned to the in-output programme of the first user process (AP) are processed by the order handling unit (AA) during the processing of the further user process (AP).

2. A method as claimed in claim 1, characterised in that waiting instructions which are combined with an in-output instruction (EAW) are arranged in the user programme.

3. A method as claimed in claim 1 or claim 2, characterised in that the interruption distribution unit (UV) distributes the interruption requests (IN) of the in-output units in accordance with firmly predetermined priorities.

4. A method as claimed in one of claims 1 to 3, characterised in that a message which indicates the complete termination of an in-output process (EAP) is sent to the sequence control unit (ABS) by means of a data intersection.

## Revendications

1. Procédé pour coordonner un grand nombre de processus avec mise en oeuvre d'une calculatrice centrale unique (MR), dans lequel les processus comprennent des processus utilisateur réalisés par des programmes utilisateur (AP) et des processus entrée-sortie (EAP) réalisés par des programmes entrée-sortie, dans lequel la calculatrice (MR) envoie une instruction, qui est une partie du programme utilisateur, à un déroulement de travaux (AA) qui est une commande de déroulement (ABS), dans lequel le déroulement de travaux (AA) interprète l'instruction, dans lequel l'unité entrée-sortie, dans lequel l'exécute l'instruction entrée-sortie, dans lequel l'exécution complète de l'instruction entrée-sortie est communiquée au déroulement des travaux (AA), dans lequel, dans le cas d'une instruction d'attente (WA, EAW) qui est une partie du programme-utilisateur, le déroulement des travaux (AA) ne poursuit le programme-utilisateur que s'il existe des instructions auxquelles on s'attendait, et dans lequel, en présence d'un autre processus utilisatuer (AP) qui est en attente et comportant les instructions attendues, ce processus utilisateur est poursuivi, caractérisé par le fait que l'on utilise comme calculatrice (MR) une microcalculatrice, que dans le cas d'une instruction entrée-sortie (EA, EAW) le déroulement des travaux (AA) appelle une ligne permanente d'entrée-sortie (EE) qui est une partie du programme entrée-sortie, qu'après l'exécution d'opérations partielles, l'unité entrée-sortie adresse des demandes d'interruption (IN) à une répartition d'interruptions (UV) qui est une partie de la commande de déroulement (ABS), que la répartition des interruptios (UV) retransmet les demandes d'interruption (N) au traitement d'interruptions correspondant d'entrée-sortie (UB) qui est une partie du programme entrée-sortie, et que les demandes d'interruptions (IN) qui sont associées au programme entrée-sortie du premier processus utilisateur sont traitées également pendant le traitement du processus utilisateur suivant (AP) par le déroulement de travaux (AA).

2. Procédé selon la revendication 1, caractérisé par le fait que dans le programme utilisateur sont prévues des instructions d'attente qui sont combinées avec une instruction entrée-sortie (EAW).

3. Procédé selon la revendication 1 ou la revendication 2, caractérisé par le fait que la répartition des interruptions (UV) répartit les demandes d'interruptions (IN) des unités entrée-sortie, suivant des priorités fixes et données à l'avance.

4. Procédé selon l'une des revendicatios 1 à 3, caractérisé par le fait qu'une instruction qui indique la fin complète d'un processus entrée-sortie (EAP), est communiquée à la commande de déroulement (ABS) à l'aide d'un point d'interruption des données.

# FIG 1

# FIG 2

0 062 107

# FIG 3

11